# EUROPEAN PATENT SPECIFICATION

(11) **EP 4 148 587 B1**
(45) Date of publication and mention of the grant of the patent: **08.05.2024**
(21) Application number: 22188677.3
(22) Date of filing: 04.08.2022
(51) Int. Cl.: G06F 11/36, G06F 11/07

(54) **END-USER DEVICE TESTING OF WEBSITES AND APPLICATIONS**
ENDBENUTZERVORRICHTUNGSPRÜFUNG VON WEBSITES UND ANWENDUNGEN
TESTS DES SITES WEB ET DES APPLICATIONS SUR UN DISPOSITIF D'UTILISATEUR FINAL

(30) Priority: 25.08.2021 US 202117411303
(43) Date of publication of application: 15.03.2023
(60) Divisional application: 24159948.9
(73) Proprietor: eBay Inc., San Jose, CA 95125 (US)
(72) Inventor: CHANDRAGUPTHARAJAH, Richard, San Jose, 95128 (US); APPAKAYALA, Kavitha, Mountain House, 95391 (US); VASUDEVAN, Jeganathan, Fremont, 94536 (US)
(74) Representative: Müller-Boré & Partner Patentanwälte PartG mbB

(56) References cited:
- WO-A1-2015/116064
- US-A1- 2012 311 538
- US-A1- 2015 193 329
- US-A1- 2020 104 232
- US-A1- 2021 142 258
- US-B1- 9 003 423

## Description

### BACKGROUND

Website and application developers often conduct testing to verify whether a user interface provides a satisfactory user experience before releasing the user interface, such as before publishing the user interface as part of a website or computing device application. Conventional approaches to user interface testing, however, are conducted in a controlled environment. For instance, developers conventionally test application and website user interfaces using a company network or using experienced engineers familiar with the user interface to simulate end-user interaction. Consequently, conventional testing approaches fail to account for real-world variables not simulated in the controlled testing environment, such as deployment of new computing devices, inexperienced users, operating system updates, current network conditions, and so forth.

While some conventional user interfaces are configured to enable problem reporting by end-users, such reporting is limited to generally indicating that a problem was perceived by the end-user, which is subjective and prone to human error. In order to identify whether a problem exists, developers are forced to first investigate whether a problem actually exists, diagnose the problem, and come up with a solution for the problem, which is tedious and cumbersome.
US 2015/193329 A1 describes a method for software bug resolution including generating, with a software bug reporting client module, a software bug report for a bug, the bug being detected in a piece of software.
WO 2015/116064 A1 describes a method and a system for end user monitoring to automate issue tracking. In example embodiments, an application is monitored during production to collect real user data and in response to detecting an error in the real user data, source code files in a source management system that are associated with the error are determined.
US 2021/142258 A1 describes systems and methods for tracking and ranking errors in computer systems used in e-commerce applications in order to identify errors that occur in e-commerce user sessions along with an estimate of potential lost revenues resulting from the error.
US 9 003 423 B1 describes a method for browser compatibility checking of a web page source document that generates one or more web page, wherein the browser compatibility checking is implemented on one or more servers.
US 2020/104232 A1 describes a method for an automated determination of web page rendering performance.
US 2012/311538 A1 describes a workflow and procedure that automates the process of requesting feedback on a software solution from a customer (user).

### SUMMARY

The present invention relates to a method and a system as defined in the attached independent claims. In an embodiment an error reporting system is described that generates, for a user interface being output by a computing device, a report using one or more test scripts for the user interface locally at the computing device. To do so, the error reporting system monitors user input at the computing device relative to an error reporting control included as part of the user interface, which enables a user of the computing device to indicate when a problem with the user interface is perceived (e.g., when the user thinks the user interface is not functioning as intended). In response to detecting input at the error reporting control, the error reporting system is configured to send a request to a service provider (e.g., a developer or controlling entity) associated with the user interface for a file containing one or more test scripts that are useable by the error reporting system to test the user interface locally at the computing device.

Test scripts are configured by a service provider associated with the user interface to generate results indicating whether individual elements included in the user interface function as intended while the user interface is output by the computing device. Test scripts are further configured to generate results describing a state of the computing device outputting the user interface. The error reporting system is further configured to capture a screen recording of the user interface when a problem is indicated via selection of the error reporting control as well as during execution of the one or more test scripts at the computing device. Via local execution of the test scripts, the error reporting system is configured to obtain data that objectively defines how the user interface is output under current operating conditions by a specific computing device configuration.

In addition to this objective data, the error reporting system is configured to obtain user feedback that subjectively describes how the computing device user perceived the problem that motivated selection of the error reporting control. To do so, the error reporting system is configured to output one or more prompts for user feedback, such as prompts for a user to verbally and/or textually describe their experience with the user interface and the problem encountered. The error reporting system is configured to aggregate results generated by executing the test scripts, the screen recordings, and the user feedback into a report for the user interface and transmit the report to the service provider.

The report is subsequently useable by the service provider to identify whether the problem was caused by the user interface itself, by the computing device outputting the user interface, or combinations thereof, and take appropriate corrective action, such as fixing the user interface, notifying a user of the computing device regarding steps that can be taken to fix the problem, or transmitting instructions that cause the computing device to automatically fix the problem.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. In some implementations, entities represented in the figures are indicative of one or more entities and thus reference is made interchangeably to single or plural forms of the entities in the discussion.
FIG. 1 is an illustration of an environment in an example implementation that is operable to employ an error reporting system to generate a report for a user interface displayed at a computing device and transmit the report to a service provider associated with the user interface.
FIG. 2 depicts a system in an example implementation showing operation of the error reporting system of FIG. 1 in greater detail.
FIG. 3 depicts examples of a user interface for which the error reporting system of FIG. 1 is configured to generate a report and feedback controls for the error reporting system.
FIG. 4 depicts examples of tests scripts utilized by the error reporting system of FIG. 1.
FIG. 5 depicts examples of tests scripts utilized by the error reporting system of FIG. 1.
FIG. 6 depicts examples of tests scripts utilized by the error reporting system of FIG. 1.
FIG. 7 is a flow diagram depicting a procedure in an example implementation in which a computing device generates a report for a user interface displayed at the computing device.
FIG. 8 is a flow diagram depicting a procedure in an example implementation in which a server device causes a computing device displaying a user interface to generate a report for the user interface and transmit the report to the server device.
FIG. 9 illustrates an example system including various components of an example device to implement the techniques described with reference to FIGS. 1-8.

### DETAILED DESCRIPTION

### Overview

Developers often test their webpages and computing device application user interfaces prior to release to ensure a satisfactory user experience. To do so, developers test their user interfaces by employing the help of fellow developers or users that are familiar with the user interface to simulate end-user interaction and provide feedback describing their experience with the user interface. However, by using such a limited scope of experienced testers, such conventional testing approaches fail to adequately represent how a wider range of users will experience the user interface after release. These conventional testing shortcomings are further compounded by the fact that developers test their user interfaces within a controlled testing environment, such as on a company network with consistent bandwidth speeds and latency.

While developers may attempt to diversify their results by testing user interfaces on different computing device types, a controlled testing infrastructure cannot comprehensively reproduce the ever-changing combinations of device types, operating system updates, application updates, browser configurations, network conditions, and so forth that impact post-release performance of the user interface.

To address these issues, techniques for locally testing a user interface on a computing device outputting the user interface are described. An error reporting system detects input at an error reporting control of the user interface and obtains test scripts from a service provider associated with the user interface. For instance, the error reporting system is configured to obtain test scripts from a server that stores a repository of test scripts specified for testing the user interface by a developer of the user interface. The test scripts are configured to be executed locally by the computing device (e.g., using hardware components of, and software/firmware components installed on, the computing device) under current operating conditions (e.g., using a current network connection, with other applications executing on the computing device, and so forth). Test scripts are configured for execution by the computing device to generate results describing a current state (e.g., hardware, software, firmware, installed applications, activated/deactivated functionality, and the like) of the computing device as well as results describing whether individual elements included in the user interface function as intended by the service provider when output by the current state of the computing device.

During execution of the test scripts, a display output by the computing device is recorded, thereby capturing a visual appearance of the user interface as output by the computing device when subject to the testing defined by the test scripts. For instance, recording the computing device display captures a visual representation of how a user interface element configured to receive user input reacts when a test script configured to simulate user input is executed by the computing device. In this manner, the test results generated by executing the test scripts and the screen recordings captured at the computing device enable a service provider to understand how the user interface is functioning during output by specific computing device operating conditions. This information can be compared against an intended functionality of the user interface to enable corrective action fixing any problems preventing the user interface from functioning as intended when output in the specific computing device operating conditions.

To further aid a service provider in understanding how the user interface is experienced under computing environments and operating conditions, computing device users are prompted to provide feedback that subjectively describes a problem perceived by the user that motivated selection of the error reporting control. Feedback can be obtained via a video capture of the user, as an audio recording of the user, as text input by the user, or combinations thereof. In this manner, the error reporting techniques described herein provide both objective and subjective context for diagnosing a problem encountered by a user interface when output in a specific computing device environment that cannot be reproduced by conventional controlled testing environments. Results generated by executing the test scripts, the screen recordings, and the user feedback are then aggregated into a report for the user interface and transmitted from the computing device to the service provider. Further discussion of these and other examples is included in the following sections and shown in corresponding figures.

In the following discussion, an example environment is described that is configured to employ the techniques described herein. Example procedures are also described that are configured for performance in the example environment as well as other environments. Consequently, performance of the example procedures is not limited to the example environment and the example environment is not limited to performance of the example procedures.

### Example Environment

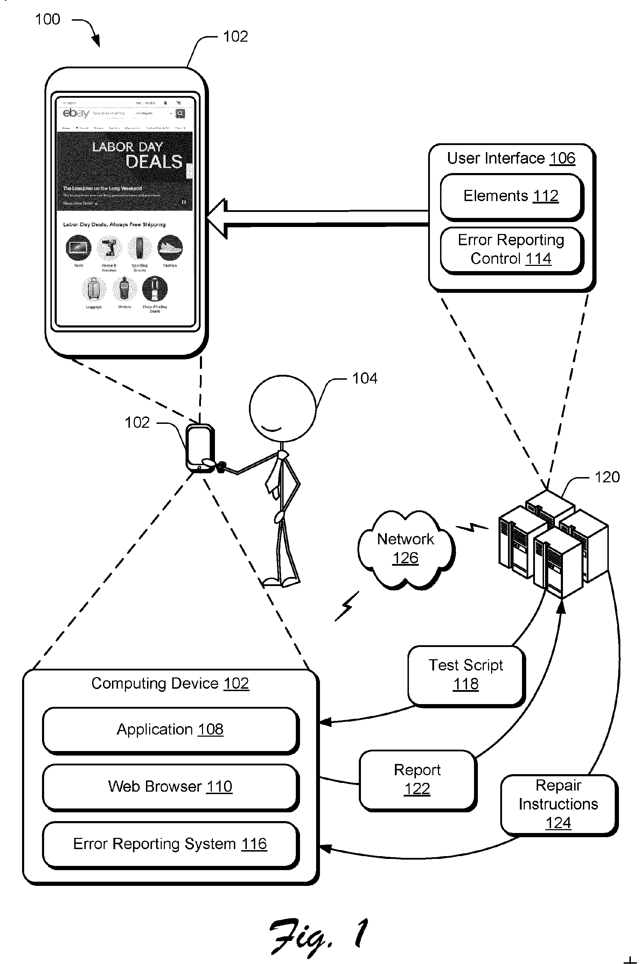

FIG. 1 is an illustration of a digital medium environment 100 in an example implementation that is operable to employ techniques described herein. As used herein, the term "digital medium environment" refers to the various computing devices and resources utilized to implement the techniques described herein. The digital medium environment 100 includes a computing device 102, which is configurable in a variety of manners.

The computing device 102, for instance, is configurable as a desktop computer, a laptop computer, a mobile device (e.g., assuming a handheld or wearable configuration such as a tablet, mobile phone, smartwatch, etc.) as illustrated as being held by a user 104 in the illustrated example of FIG. 1, and so forth. Thus, the computing device 102 ranges from full resource devices with substantial memory and processor resources (e.g., personal computers, game consoles) to low-resource devices with limited memory and/or processing resources (e.g., mobile devices). Additionally, although a single computing device 102 is shown, the computing device 102 is representative of a plurality of different devices, such as multiple servers utilized by a business to perform operations "over the cloud. "

In the illustrated example, the computing device 102 is configured to display a user interface 106. The user interface 106 is representative of digital content configured to be output for display by an application 108 (e.g., a social networking application, an e-commerce application, a financial application, etc.) and/or a web browser 110 implemented by the computing device 102. The user interface 106, for instance, is representative of a document file written in a markup language, such as Hypertext Markup Language (HTML), configured for consumption by the web browser 110 to be displayed as a web page. The user interface 106 is configured as including a plurality of elements 112, which are representative of aspects that collectively define a visual appearance of, and enable functionality provided by, the user interface 106. For instance, the elements 112 are representative of digital content and or controls displayed as part of the user interface 106, such as images, videos, text, links, headings, menus, tables, action controls (e.g., radio buttons, edit fields, check boxes, scroll bars, etc.), and so forth. In this manner, the elements 112 represent visual components of the user interface 106 (e.g., images, text, videos, field width elements, alignment elements, etc.) as well as components of the user interface 106 configured to be interacted with via user input to navigate the user interface 106 (e.g., chevron elements of a scrollbar), provide text to the user interface 106 (e.g., a text box configured with type-ahead functionality, autofill functionality, etc.) change a display of the user interface 106 (e.g., elements configured to display a drop-down list, elements configured to update one or more data fields displayed in the user interface 106, elements configured to display an overlay in the user interface 106, etc.), and so forth.

The user interface 106 is further configured to include an error reporting control 114. The error reporting control 114 is representative of a selectable option provided by the user interface 106 that enables the user 104 to indicate when a problem is perceived with the user interface 106, such as when the user 104 thinks that certain elements 112 are not properly functioning, when a display appearance of the user interface 106 seems incorrect, if the user interface 106 is not responding, and so forth. For instance, the error reporting control 114 is representative of a button, a menu option, a control triggered by a keyboard shortcut (e.g., via input to an "F1" function key), combinations thereof, and the like.

The computing device 102 includes an error reporting system 116. The error reporting system 116 is implemented at least partially in hardware of the computing device 102. Although illustrated in FIG. 1 as implemented separately from the application 108 and the web browser 110, in some implementations the error reporting system 116 is representative of functionality integrated into the application 108 and/or the web browser 110. In response to detecting input at the error reporting control 114, the error reporting system 116 is configured to request at least one test script 118 from a service provider 120 associated with the user interface 106, such as an entity that published the user interface 106 for consumption via the web browser 110, an entity that developed the application 108, and so forth.

In response to receiving a request for the at least one test script 118 for the user interface 106, the service provider 120 transmits the at least one test script 118 to the computing device 102. The at least one test script 118 is representative of one or more test files (e.g., JavaScript tests) specified by a developer of the user interface 106 (e.g., the service provider 120) for testing whether the user interface 106 is being output as intended at the computing device 102.

Upon receiving the at least one test script 118, the error reporting system 116 executes the at least one test script 118 and generates a report 122 describing results generated from executing the at least one test script 118. As part of executing the at least one test script 118, the error reporting system 116 is configured to capture at least one screenshot of the user interface 106, such as a screenshot of the user interface 106 at the time of input selecting the error reporting control 114, during execution of the at least one test script 118, and so forth. In some implementations, capturing at least one screenshot of the user interface 106 is subject to user authorization, such that a user of the computing device 102 is required to provide consent prior to capturing the at least one screenshot. The report 122 is thus representative of information describing whether the elements 112 are included and/or functioning as intended by the service provider 120 during output of the user interface 106 at the computing device 102. Information included in the report 122 is useable by the service provider 120 to identify one or more repair instructions 124 for remedying a problem with the user interface 106.

In implementations where the report 122 indicates that the problem is caused by the user interface 106 itself, the service provider 120 may take corrective action to update the user interface 106 to prevent subsequent instances of the same or similar problem. Alternatively, in implementations where information included in the report 122 indicates that the problem is caused by the computing device 102, the service provider 120 can generate repair instructions 124 and transmit the repair instructions 124 to the computing device 102. The repair instructions 124 are representative of data describing manual steps that can be performed by the user 104 of the computing device 102 to prevent subsequent instances of the problem (e.g., instructions to enable JavaScript, clear cookies, switch to a different web browser 110, etc.). Alternatively or additionally, the repair instructions 124 are representative of instructions that, upon receipt by the computing device 102, cause the computing device 102 to automatically perform one or more actions to remedy the problem (e.g., instructions that cause the computing device 102 to disable advertisement blocking software, cause the computing device 102 to restart the application 108 displaying the user interface 106, cause the computing device 102 to enable JavaScript, and so forth). In implementations, the computing device 102 is configured to receive the user interface 106, the at least one test script 118, and the repair instructions 124 from the service provider 120 via a network, such as via network 126.

In some implementations, in addition to including results obtained from executing the at least one test script 118 at the computing device 102, the error reporting system 116 is configured to generate the report 122 to include feedback provided by the user 104 describing the perceived problem that prompted selection of the error reporting control 114. In this manner, the report 122 provides both objective data describing a current state of the computing device 102 and the user interface 106 as output by the computing device 102 as well as subjective data describing a perceived problem with the user interface 106 as observed by the user 104.

The error reporting system 116 then transmits the report 122 to the service provider 120, such as via the network 126. The report is then useable by the service provider 120 to diagnose whether the perceived problem was caused by the user interface 106 or by the computing device 102. In some implementations, responsive to diagnosing the problem as being caused by the computing device 102, the service provider 120 is configured to provide repair instructions to the error reporting system 116. The repair instructions are configurable in a variety of manners, such as digital content configured for output via display at the computing device 102 to inform the user 104 of manual steps that can be taken to remedy the problem, computer-executable instructions that can be executed by the error reporting system 116 to automatically fix the problem, or combinations thereof.

The error reporting system 116 is thus configured to generate a report describing a state of the user interface 106 and a state of the computing device 102 outputting the user interface 106 when a problem was perceived by the user 104 of the computing device 102.

In general, functionality, features, and concepts described in relation to the examples above and below are employable in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are configured to be applied together and/or combined in different ways. Thus, individual functionality, features, and concepts described in relation to different example environments, devices, components, figures, and procedures herein are useable in any suitable combinations and are not limited to the combinations represented by the enumerated examples in this description.

### User Interface Testing at an End-User Device

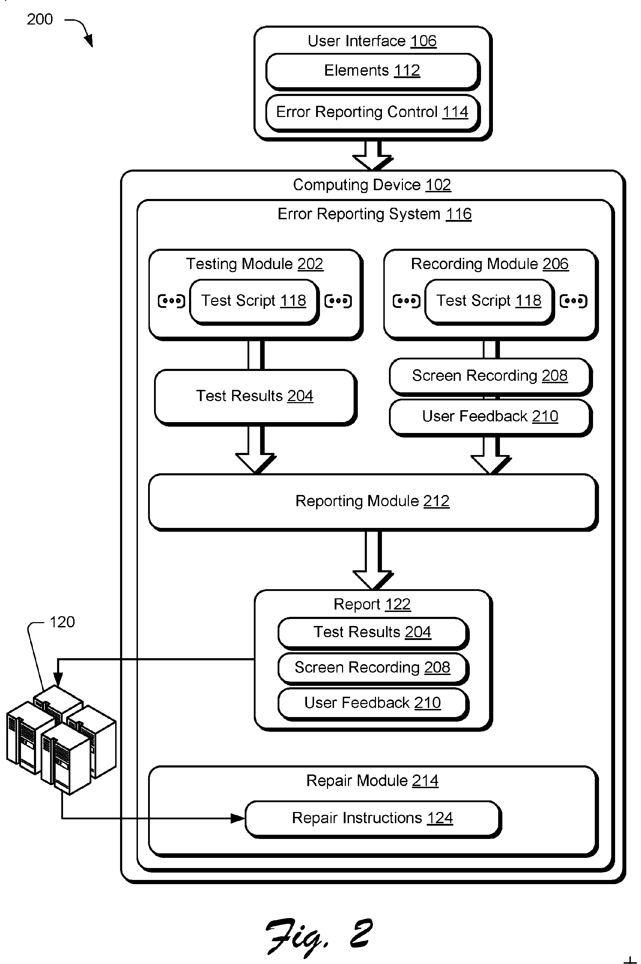

FIG. 2 depicts a system 200 in an example implementation showing operation of the error reporting system 116 of FIG. 1 in greater detail.

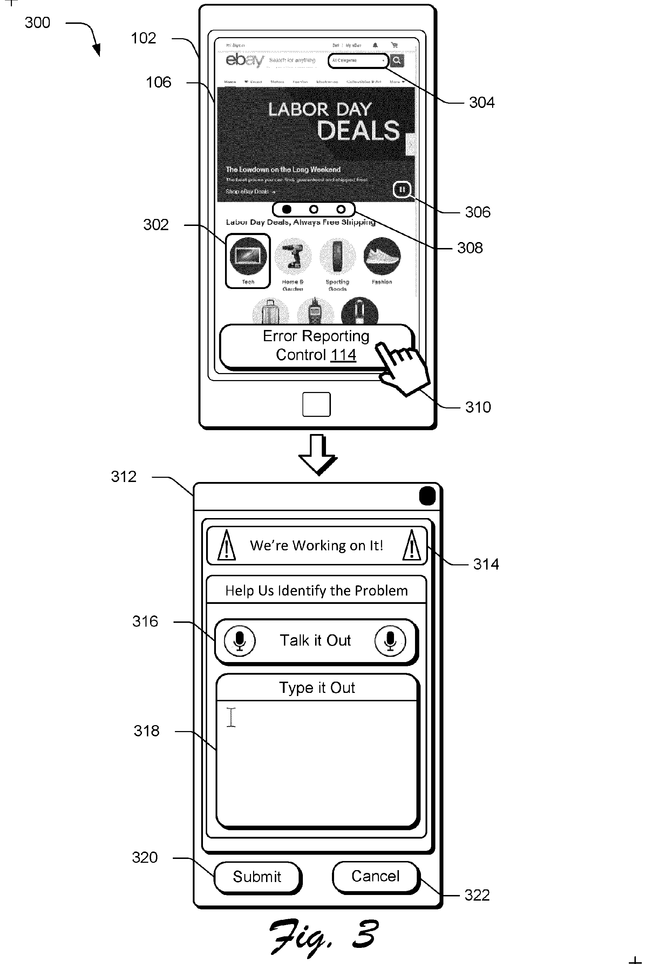

FIG. 3 is an illustration of a digital medium environment 300 in an example implementation of the user interface 106 rendered at the computing device 102 and example prompts for user feedback displayed in response to detecting input at the error reporting control 114 of the user interface 106. In the illustrated example, the user interface 106 is output for display via a display device (e.g., a screen) associated with the computing device 102.

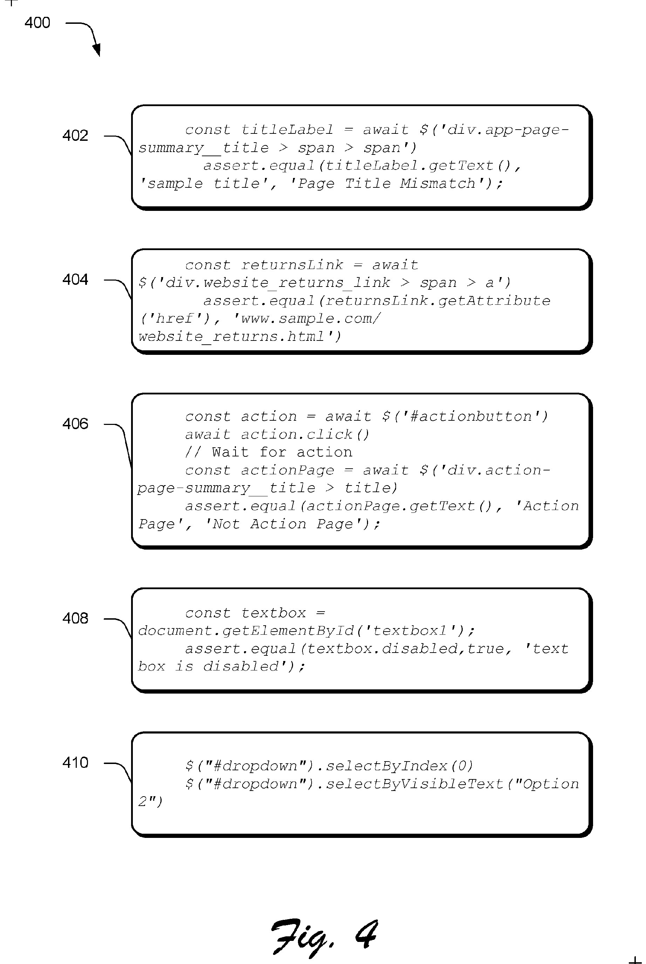

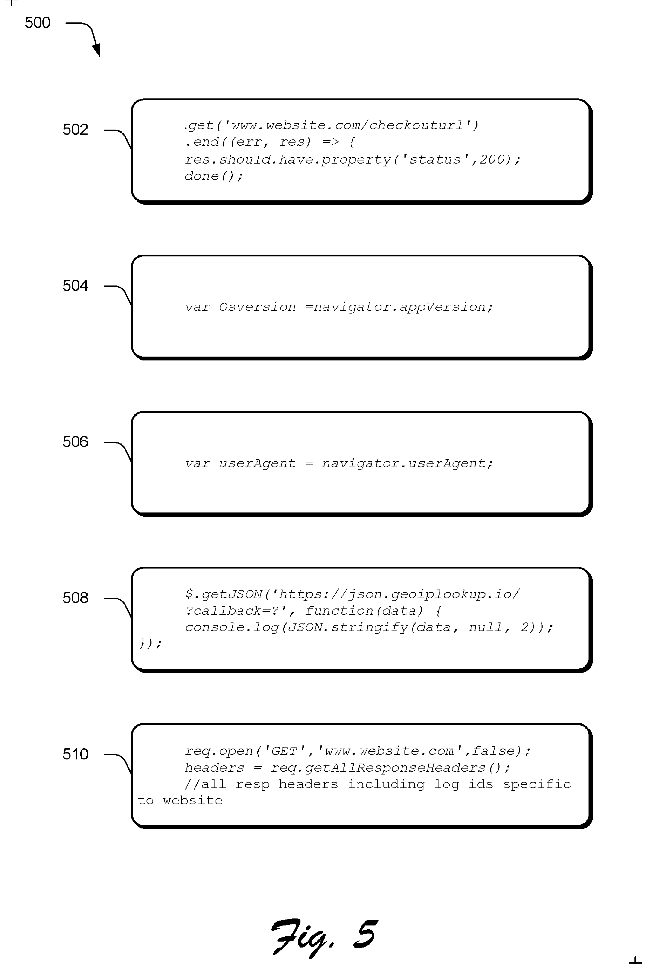

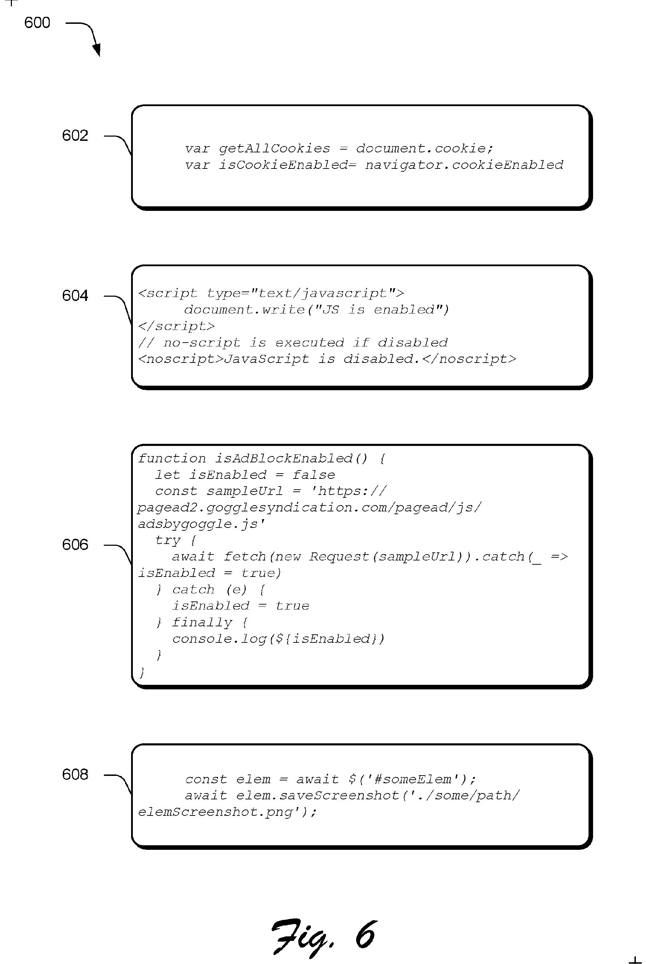

FIGS. 4-6 depict examples of tests scripts utilized by the error reporting system 116.

As illustrated in FIG. 2, a user interface 106 including elements 112 and an error reporting control 114 is received by a computing device implementing the error reporting system 116 and output for display by the computing device (e.g., via the application 108 or the web browser 110 of FIG. 1). The error reporting system 116 includes a testing module 202, which is representative of functionality of the error reporting system 116 to obtain at least one test script 118 for the user interface 106 responsive to detecting user input selecting the error reporting control 114. In some implementations, the error reporting control 114 is configured by a developer of the user interface 106 to transmit a request for the at least one test script 118 to a service provider 120 associated with the user interface 106 when the error reporting control 114 is selected.

In response to receiving the at least one test script 118 from the service provider 120 associated with the user interface 106, the error reporting system 116 is configured to execute the at least one test script 118 locally at the computing device implementing the error reporting system 116, such as at the computing device 102 of FIG. 1. As a result of executing the at least one test script 118 locally at the computing device, the error reporting system 116 generates test results 204, which are representative of information describing, for each test script of the at least one test script 118, a test performed by the computing device and a result of the test.

For instance, the test results 204 are configured to describe a performance of the user interface 106 as output by the computing device implementing the error reporting system 116, which can then be compared to data describing an intended performance of the user interface 106 to identify whether a problem exists. As an example, in an implementation where the at least one test script 118 includes a test script configured to determine whether one or more labels are present in the user interface 106, the test results 204 are generated to describe the test that was performed in determining whether the one or more labels are present and an indication of whether each tested label is present in the user interface 106. Test script 402 represents an example of at least one test script 118 configured to determine whether one or more labels are present in the user interface 106. In an implementation where the at least one test script 118 includes a test script configured to verify whether one or more hyperlinks included in the user interface 106 are active, the test results 204 are generated to describe the test(s) performed in verifying whether the one or more hyperlinks are active and an indication of whether each of the one or more hyperlinks are active. In some implementations, execution of such an example hyperlink verification test script causes the computing device implementing the error reporting system 116 to simulate user input selecting each of the one or more hyperlinks, thereby mimicking how a user of the computing device would experience interaction with the one or more hyperlinks given the specific configuration of the computing device (e.g., operating system type and version, web browser or application type and version, available processing resources, network connection and speed, and so forth). Test script 404 represents an example of at least one test script 118 configured to verify whether one or more hyperlinks are active in the user interface 106.

As another example, the at least one test script 118 is representative of a test configured to verify a presence of one or more action elements in the user interface 106, and the test results 204 is generated to describe the specific action elements tested via execution of the at least one test script 118 as well as a result describing whether each tested action element was identified as present. Test script 406 represents an example of at least one test script 118 configured to verify a presence of one or more action elements in the user interface 106. As described herein, action elements refer to a subset of the elements 112 included in the user interface 106 that are configured to be interacted with via user input to navigate the user interface 106, change a display of the user interface 106, and so forth. For instance, example action elements include digital media playback controls, selectable icons, scroll bars, etc.

The at least one test script 118 is further representative of one or more tests configured to assess other, non-action ones of the elements 112 included in the user interface 106. For instance, in implementations the at least one test script 118 is configured to cause the computing device implementing the error reporting system 116 to identify whether one or more of the elements 112 are hidden or disabled in the user interface 106 as output by the computing device. Test script 408 represents an example of at least one test script 118 configured to verify whether one or more of the elements 112 are hidden or disabled in the user interface 106. In such an example implementation, the test results 204 is configured to describe both the tests performed in identifying whether the elements 112 are hidden or disabled as well as a result each of the tested elements 112.

In some implementations, the at least one test script 118 is configured to be executed by the computing device implementing the error reporting system 116 to determine whether intended functionality of one or more of the elements 112 is operating as designed. For instance, the at least one test script 118 may be configured to determine whether text field elements, drop-down menu elements, hover-over elements, etc. respond to user input as intended by a developer of the user interface 106. Test script 410 represents an example of at least one test script 118 configured to verify whether intended functionality of one or more of the elements 112 is operating as designed in the user interface 106. In this manner, executing the at least one test script 118 is configured to simulate user input with one or more of the elements 112 and the test results 204 is generated to include data describing the simulated input and response of each of the elements 112 tested by the at least one test script 118.

In addition to causing the computing device executing the error reporting system 116 to test various elements 112 of the user interface 106 as output by the computing device, the at least one test script 118 is representative of instructions that cause the error reporting system 116 to include in the test results 204 data describing the user interface 106 received from the service provider 120. For instance, in some implementations executing the at least one test script 118 causes the error reporting system 116 to generate test results 204 describing a version and type of the user interface 106 (e.g., HTTP response header information and usage statistics for the user interface 106, a last update of the user interface 106; a device, application, and/or browser type at which the user interface 106 is configured for output, whether the user interface 106 is output as including one or more experimental elements 112, and so forth). For instance, test script 502 represents an example of at least one test script 118 configured to verify that a HTTP request for the user interface 106 is successfully made from the computing device 102.

In this manner, the test results 204 generated by the testing module 202 includes information describing a state of the user interface 106 as output by the specific computing device implementing the error reporting system 116. In addition to including information describing the user interface 106, the at least one test script 118 are configured to cause the testing module 202 to generate the test results 204 with information describing the computing device outputting the user interface 106.

For instance, in some implementations the at least one test script 118 causes the error reporting system 116 to generate the test results 204 with data describing a current network connection between the computing device implementing the error reporting system 116 and the service provider 120, such as a connection type, speed, and so forth between the computing device 102 and the network 126. The at least one test script 118 is further configured to cause the computing device implementing the error reporting system 116 to include information describing one or more cookies stored on the computing device (e.g., cookies associated with the user interface 106 and/or one or more websites accessed by the computing device) in the test results 204.

Alternatively or additionally, the at least one test script 118 is configured to cause the computing device implementing the error reporting system 116 to include information describing a type and/or a version of the application 108 or the web browser 110 being used to display the user interface 106 at the computing device. Alternatively or additionally, the at least one test script 118 is configured to cause the computing device implementing the error reporting system 116 to include information describing a type and a version of an operating system being executed by the computing device as well as information describing a hardware configuration of the computing device (e.g., manufacturer, device type, serial number, etc.). Test script 504 represents an example of at least one test script 118 configured to ascertain an operating system type and version for a computing device outputting the user interface 106. Test script 506 represents an example of at least one test script 118 configured to ascertain a browser type and version used to output the user interface 106.

Alternatively or additionally, the at least one test script 118 is configured for execution to ascertain information specifying one or more of an IP address of the computing device implementing the error reporting system 116 or an indication of functionality currently being implemented by the computing device (e.g., whether JavaScript is currently enabled, whether the computing device is currently running advertisement blocking software, and so forth).

For instance, test script 508 represents an example of at least one test script 118 configured to ascertain location information for a computing device outputting the user interface 106, such as an Internet Protocol (IP) address, a location, a country, combinations thereof, and so forth, associated with the computing device. Test script 510 represents an example of at least one test script 118 configured to ascertain and verify HTTP headers associated with the user interface 106 (e.g., associated with a parent domain of the user interface 106) stored at the computing device outputting the user interface 106. Test script 602 represents an example of at least one test script 118 configured to ascertain cookies stored on the computing device outputting the user interface 106. Test script 604 represents an example of at least one test script 118 configured to determine whether JavaScript is enabled at the computing device outputting the user interface 106 and display an indication of whether JavaScript is enabled as part of the report 122. Test script 606 represents an example of at least one test script 118 configured to determine whether advertisement blocking software is being implemented by the computing device outputting the user interface 106.

In this manner, the at least one test script 118 is representative of one or more tests specified by a developer of the user interface 106 that cause the computing device outputting the user interface 106 to generate test results 204 describing both a state of the user interface 106 as currently output by the computing device as well as information describing a current state of the computing device itself.

The error reporting system 116 is additionally configured to include a recording module 206. The recording module 206 is representative of functionality of the error reporting system 116 to capture information describing a state of the user interface 106 as output by the computing device implementing the error reporting system 116 when input is detected at the error reporting control 114 and during execution of the at least one test script 118, collectively represented as screen recording 208. Alternatively or additionally, the recording module 206 is representative of functionality of the error reporting system 116 to obtain user feedback 210, which is representative of input provided by the user 104 describing the perceived problem that motivated selection of the error reporting control 114.

For instance, in some implementations the at least one test script 118 is configured to include instructions that cause the recording module 206 to capture a screenshot of the user interface 106 as output by the computing device implementing the error reporting system 116 in response to detecting input to the error reporting control 114. For instance, test script 608 represents an example of at least one test script 118 configured to cause the recording module 206 to capture a screenshot of the user interface 106 as output by the computing device implementing the error reporting system 116. Alternatively or additionally, the at least one test script 118 is configured to include instructions that cause the recording module 206 to record one or more screenshots (e.g., individual still images, videos comprising a plurality of screenshots, or combinations thereof) during execution of the at least one test script 118 by the testing module 202.

For instance, in implementations where the at least one test script 118 is configured to cause the testing module 202 to simulate user input with one or more of the elements 112, the at least one test script 118 is further configured to cause the recording module 206 to generate a screen recording 208 that captures a visual display of the user interface 106 as output by the computing device during the simulation of user input with the elements 112. In this manner, the screen recording 208 is representative of data that represents a visual appearance of the user interface 106 as output by the computing device implementing the error reporting system 116 at the time of input selecting the error reporting control 114 and/or during execution of the at least one test script 118 triggered via selection of the error reporting control 114.

In some implementations, the at least one test script 118 is configured to prompt the user 104 of the computing device implementing the error reporting system 116 to provide user feedback 210 describing the problem perceived by the user 104 that led to the selection of the error reporting control 114. For instance, the at least one test script 118 may cause the recording module 206 to present a prompt for the user 104 to provide audio and/or text describing the problem they encountered with the user interface 106 and record the user's 104 response(s) to the prompt(s) as user feedback 210. Examples of prompts for user feedback 210 output by the recording module 206 are described in further detail below with respect to FIG. 3.

In response to executing the at least one test script 118, the testing module 202 and the recording module 206 communicate the test results 204, the screen recording 208, and the user feedback 210 to a reporting module 212 of the error reporting system 116. The reporting module 212 is configured to aggregate data from the test results 204, the screen recording 208 and the user feedback 210 into a report 122 for the user interface 106 and transmit the report 122 to the service provider 120 associated with the user interface 106. In some implementations, instructions for transmitting the report 122 to the service provider 120 are included in the at least one test script 118, such that the error reporting system 116 is configured to automatically generate and transmit the report 122 to the service provider 120 independent of user input or user intervention beyond input describing the user feedback 210.

The error reporting system 116 is further configured to include a repair module 214. The repair module 214 is representative of functionality of the error reporting system 116 to output and/or execute one or more repair instructions 124 received from the service provider 120 based on the report 122. For instance, in an example implementation where the repair instructions 124 include visual and/or audible instructions configured to be output to the user 104 of the computing device 102, the repair module 214 is configured to output a display of the repair instructions 124 (e.g., as a text, an image, a video, or combinations thereof describing one or more steps for the user 104 to perform to remedy a problem indicated by the report 122).

Alternatively or additionally, in an example implementation where the repair instructions 124 include executable instructions for remedying a problem indicated by the report 122, the repair module 214 is configured to execute the repair instructions 124 independent of user input or user intervention to automatically remedy the problem indicated by the report. For instance, if the service provider 120 identifies that the problem is likely due to JavaScript being disabled at the computing device 102, the repair instructions 124 may include a visual indication (e.g., text, graphics, a video, or combinations thereof) for output in the user interface 106 that instructs a user to enable JavaScript to remedy the problem, instructions that cause the repair module 214 to automatically activate JavaScript independent of user input, or combinations thereof.

FIG. 3 is an illustration of a digital medium environment 300 in an example implementation of the user interface 106 rendered at the computing device 102 and example prompts for user feedback 210 displayed in response to detecting input at the error reporting control 114 of the user interface 106.

In the illustrated example, the user interface 106 is output for display via a display device (e.g., a screen) associated with the computing device 102. The illustrated example of FIG. 3 depicts various examples of elements 112 that may be included as part of the user interface 106. For instance, the user interface 106 is depicted as including an icon element 302 labeled "Tech" that is selectable via user input to cause the user interface 106 to display digital content associated with a tech category, as defined by the service provider 120 associated with the user interface 106. The user interface 106 is additionally configured with a drop-down element 304, which is representative of a graphical control element that is electable to cause display of one or more selectable options, separate displays of content, additional content displayed within the user interface 106, and so forth, organized in a format defined by a service provider 120 associated with the user interface 106 (e.g., a list format).

The example user interface 106 illustrated in FIG. 3 is further configured with a playback control element 306, which is configured to play, pause, stop, or otherwise navigate a display of digital media content output in the user interface 106. The example user interface 106 illustrated in FIG. 3 is further configured with a plurality of radio button elements 308, which is representative of a graphical control element that enables selection of one of a predefined set of mutually exclusive options defined by the service provider 120 associated with the user interface 106. User input at the icon element 302, the drop-down element 304, the playback control element 306, or the radio button elements 308 thus causes the computing device 102 to perform one or more actions (e.g., visually altering a display of the user interface 106) defined by the service provider 120 associated with the user interface 106. The icon element 302, the drop-down element 304, the playback control element 306, and the radio button elements 308 thus represent a subset of, and do not exhaustively describe all possible types or configurations of, elements 112 with which the user interface 106 can be configured.

The user interface 106 is further displayed as including an error reporting control 114, illustrated as a selectable icon in the digital medium environment 300, which can be activated via user input, as represented generally by a hand 310 of the user 104. Although illustrated as a selectable icon, the error reporting control 114 can be configured in any sort of manner, such as a selectable menu option, as a button, as a hyperlink, as a control activated by one or more keyboard shortcuts, gestures, voice commands, and so forth input to the computing device 102, or combinations thereof. In some implementations, the error reporting control 114 is configured to display instructions for the user 104 to select the error reporting control 114 when the user 104 perceives that one or more of the elements 112 of the user interface 106 are not functioning properly. For instance, the user interface 106 may be configured with instructions for the user to select the error reporting control 114 if the user perceives a problem with the user interface 106, such as if the user 104 selects the drop-down element 304 and a drop-down menu does not appear, selects the playback control element 306 and playback of digital media content within the user interface 106 does not change, or selects one of the icon element 302 or the radio button elements 308 and a visual appearance of the user interface 106 does not change, and so forth.

In response to detecting input at the error reporting control 114, the error reporting system 116 is configured to obtain at least one test script 118 from the service provider 120 associated with the user interface 106 and cause the computing device 102 to execute the at least one test script 118 upon receipt. In some implementations, executing the at least one test script 118 causes the computing device 102 to modify the user interface 106 to display a window 312 that includes one or more of a visual indication 314 that the computing device 102 is currently executing the at least one test script 118, a prompt 316 for the user 104 to provide a verbal description of the problem that prompted selection of the error reporting control 114, or a prompt 318 for the user 104 to provide a textual description of the problem that prompted selection of the error reporting control 114.

In some implementations, the window 312 is configured to be output as an overlay of the user interface 106 and displayed within a context of the application 108 or the web browser 110 outputting the user interface 106. Alternatively or additionally, the window 312 is configured to be output as a display separate from the user interface 106, such as in a pop-up window or other display configuration that is output by the computing device 102 independent of the user interface 106 (e.g., remains displayed by the computing device 102 if the user interface 106 is closed or removed from focus).

In response to receiving input at the prompt 316, the error reporting system 116 causes the recording module 206 to capture audio of the user 104 verbally describing what caused them to select the error reporting control 114 and incorporate the captured audio as user feedback 210 included in the report 122. Alternatively or additionally, in response to receiving input at the prompt 318, the error reporting system 116 causes the recording module 206 to incorporate text input to a text field of the prompt 318 as user feedback 210 included in the report 122.

In some implementations, the window 312 is configured to include a submit control 320 and a cancel control 322. The submit control 320 is configured to enable the user 104 to affirm that selection of the error reporting control 114 was intentional and that no further user feedback 210 remains to be input (e.g., via one or more of the prompts 316 or 318). The cancel control 322 is configured to enable the user 104 to indicate that the error reporting control 114 was selected in error (e.g., that no problem was perceived with the user interface 106).

In some implementations, the error reporting system 116 is configured to generate the report 122 responsive to receiving input at one or both of the submit control 320 or the cancel control 322. In implementations where the cancel control 322 is selected, the error reporting system 116 is configured to continue executing the at least one test script 118 and generate the report 122 with an indication that the cancel control 322 was selected. Such an indication can then be used by the service provider 120 to flag the report 122 as indicative of data describing operation of the user interface 106 as intended, which can then be contrasted against data describing a problem with the user interface 106 (e.g., data included in a report 122 generated responsive to input at the submit control 320).

In this manner, the report 122 generated by the error reporting system 116 includes information describing a state of the user interface 106 as output by the computing device 102, information describing the computing device 102 used to output the user interface 106, a visual representation of the user interface 106 as output by the computing device 102 prior to and during testing via execution of the at least one test script 118, and information describing a user's perception of a problem with the user interface 106 as output by the computing device 102.

By executing the at least one test script 118 on each of a plurality of different client devices that receive input at the error reporting control 114 while displaying the user interface 106, the service provider 120 is configured to receive information describing how the user interface 106 is output at a variety of different types of devices, web browsers, applications, and under various network conditions. Reports 122 generated and received as part of executing the at least one test script 118 for a user interface 106 can then be tagged and aggregated by the service provider 120 to take corrective action, such as fixing a problem with the user interface 106, reverting the user interface to a prior state, identifying and transmitting repair instructions 124 to devices with configuration issues causing the problem, combinations thereof, and so forth. The aggregate reports 122 received from these different computing devices thus provides comprehensive information of an end-user's experience with the user interface 106 that cannot be recreated by the service provider 120 within a controlled testing environment.

Having considered example systems and techniques for generating a report locally at a computing device outputting a user interface and transmitting the report to a service provider associated with the user interface, consider now example procedures to illustrate aspects of the techniques described herein.

### Example Procedures

The following discussion describes techniques that are configured to be implemented utilizing the previously described systems and devices. Aspects of each of the procedures are configured for implementation in hardware, firmware, software, or a combination thereof. The procedures are shown as a set of blocks that specify operations performed by one or more devices and are not necessarily limited to the orders shown for performing the operations by the respective blocks. In portions of the following discussion, reference is made to FIGS. 1-6.

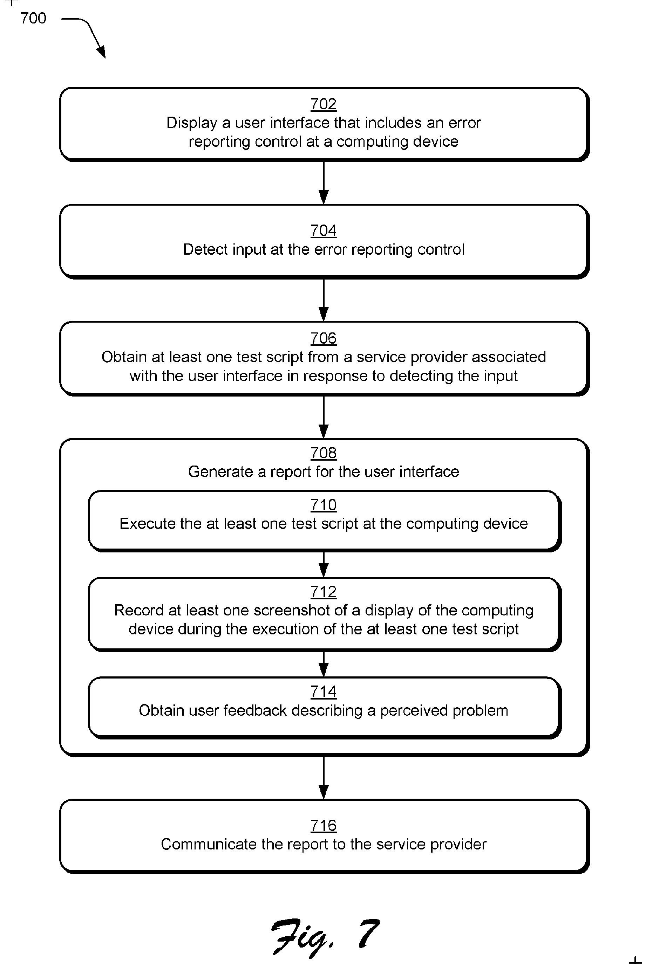

FIG. 7 depicts a procedure 700 in an example implementation of a computing device 102 generating a report 122 for a user interface 106 displayed at the computing device 102. To begin, a user interface including an error reporting control is displayed at a computing device (block 702). For instance, the computing device 102 outputs a display of the user interface 106 including the error reporting control 114 as part of the application 108 or the web browser 110. Input is detected at the error reporting control (block 704). For instance, user input represented by the hand 310 of the user 104 is input at the computing device 102 selecting the error reporting control 114.

In response to detecting input at the error reporting control, at least one test script is obtained from a service provider associated with the user interface (block 706). The error reporting system 116, for instance, communicates a request to the service provider 120 associated with the user interface 106 for the at least one test script 118. In some implementations, the request for the at least one test script 118 is encoded into the error reporting control 114 of the user interface 106, such that input at the error reporting control 114 causes the computing device 102 outputting the user interface 106 to automatically (i.e., without user input) obtain the at least one test script 118 from the service provider 120 by transmitting a request to the service provider. The at least one test script 118 obtained by the error reporting system 116 includes one or more tests defined by the service provider 120 for verifying whether the user interface 106 is functioning at the computing device 102 as intended. In implementations, the at least one test script 118 includes tests configured to determine whether elements 112 of the user interface 106 are functioning as intended, diagnose a current state of the computing device 102 outputting the user interface 106, or combinations thereof.

A report is then generated for the user interface (block 708). As part of generating the report, the at least one test script is executed at the computing device (block 710). The testing module 202 of the error reporting system 116, for instance, executes the at least one test script 118 locally at the computing device 102 using hardware components and processing resources of the computing device 102. As part of generating the report, at least one screenshot of a display of the computing device is recorded during the execution of the at least one test script (block 712). The recording module 206, for instance, captures a screenshot of the user interface 106 as output by the computing device 102 in response to detecting input at the error reporting control 114, provides a visual depiction of an appearance of the user interface 106 and its elements 112. Alternatively or additionally, the recording module 206 is configured to capture one or more screenshots of the user interface 106 as output by the computing device 102 during execution of the at least one test script 118 by the testing module 202. The one or more screenshots captured by the recording module 206 are then output as the screen recording 208.

As further part of generating the report, user feedback describing a perceived problem that prompted the input to the error reporting control is obtained (block 714). The recording module 206, for instance, outputs at least one prompt for user feedback, such as prompt 316 or prompt 318, requesting a verbal and/or a textual description from the user 104 explaining why the error reporting control 114 was selected. A response provided by the user 104 to one or more of the prompts 316 or 318 is recorded by the recording module 206 and output as user feedback 210 for inclusion in the report. The reporting module 212 then aggregates the test results 204, the screen recording 208, and the user feedback 210 as the report 122 for the user interface 106.

The report is then communicated to the service provider associated with the user interface (block 716). The error reporting system 116, for instance, transmits the report 122 to the service provider 120 associated with the user interface 106 (e.g., the service provider 120 from which the user interface 106 and the at least one test script 118 were obtained by the computing device 102).

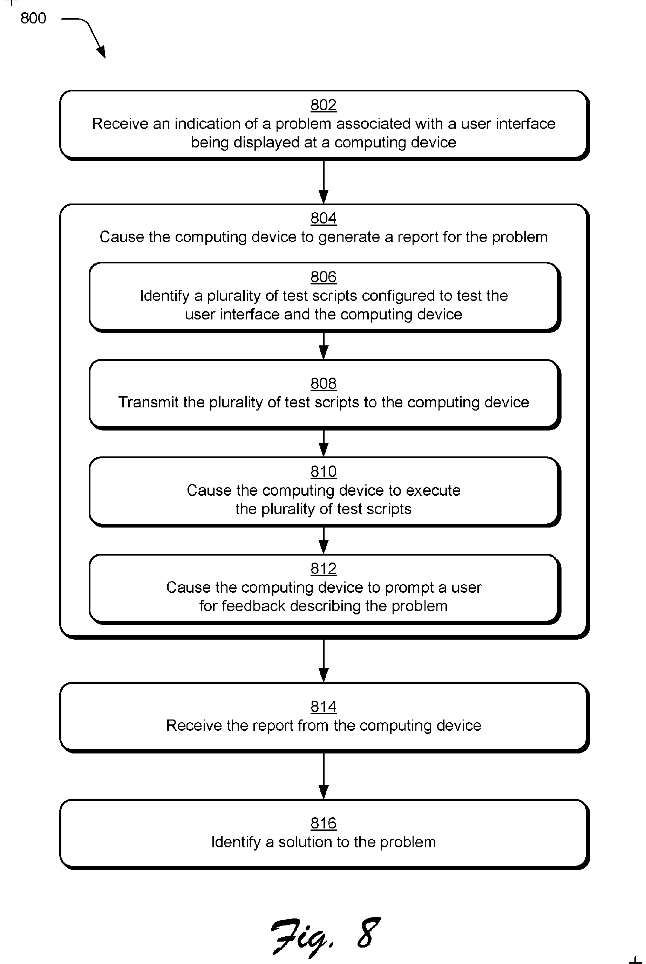

FIG. 8 depicts a procedure 800 in an example implementation of a server device causing a computing device displaying a user interface to generate a report for the user interface and transmit the report to the server device. To begin, an indication of a problem associated with a user interface being displayed at a computing device is received (block 802). The service provider 120, for instance, receives an indication from an error reporting system 116 implemented at a computing device 102 outputting a user interface 106 of input received at an error reporting control 114 included in the user interface 106. In some implementations, the indication of the problem is caused to be transmitted from the computing device 102 to the service provider 120 via instructions encoded in the error reporting control 114, such that user input at the error reporting control 114 commands the computing device 102 to communicate a request for at least one test script 118 associated with the user interface 106 from the service provider 120.

In response to receiving the indication of the problem, the computing device is caused to generate a report for the problem (block 804). To cause the computing device to generate the report for the problem, a plurality of test scripts configured to test the user interface and the computing device are identified (block 806) and transmitted to the computing device (block 808). The service provider 120, for instance, identifies at least one test script 118 associated with the user interface 106 being output by the computing device 102 from which the indication of the problem was received and transmits the at least one test script 118 to the computing device 102 (e.g., via network 126).

As part of causing the computing device to generate the report for the problem, the computing device is caused to execute the plurality of test scripts (block 810). The at least one test script 118 is configured by the service provider 120 such that, upon receipt by the error reporting system 116 implemented at the computing device 102, the error reporting system 116 causes the testing module 202 to execute the at least one test script 118 using hardware components and processing resources of the computing device 102. In some implementations, the at least one test script 118 is further configured such that, upon receipt by the error reporting system 116, the error reporting system 116 causes the recording module 206 to capture images describing a visual appearance of the user interface 106 as output by the computing device 102 when the indication of the problem is received, during execution of the at least one test script 118 at the computing device 102, or combinations thereof, individually and collectively represented by the screen recording 208.

As further part of causing the computing device to generate the report for the problem, the computing device is caused to prompt a user for feedback describing the problem (block 812). The at least one test script 118, for instance, is configured by the service provider 120 to cause the recording module 206 to outputs at least one prompt for user feedback at the computing device 102, such as prompts 316 or 318, requesting a verbal and/or a textual description from the user 104 explaining why the error reporting control 114 was selected. A response provided by the user 104 to one or more of the prompts 316 or 318 is recorded by the recording module 206 and output as user feedback 210 for inclusion in the report. The reporting module 212 then aggregates the test results 204, the screen recording 208, and the user feedback 210 as the report 122 for the user interface 106.

The report is then received from the computing device (block 814). The at least one test script 118, for instance, is configured by the service provider 120 to include an instruction that causes the error reporting system 116 to transmit the report 122 to the service provider 120 after the report 122 is generated by the computing device 102. A solution to the problem is then identified (block 816). The service provider 120, for instance, analyzes data included in the report 122 and ascertains whether the problem with the user interface 106 is caused by the user interface 106, by the computing device 102, or combinations thereof.

In response to determining that the problem is caused by the user interface 106, the service provider 120 takes corrective action, such as by reverting the user interface 106 to a prior version, updating the user interface 106, and so forth. Alternatively or additionally, in response to determining that the problem is caused by the computing device 102, the service provider 120 generates repair instructions 124 and transmits the repair instructions 124 to the computing device 102. In some implementations, transmitting the repair instructions 124 causes the computing device 102 to output a display of information that is useable by the user 104 to correct the problem, causes the computing device 102 to automatically take corrective action to fix the problem via execution by the repair instructions 124, or combinations thereof. In this manner, the techniques described herein are configured to cause a computing device to generate a report for a user interface in response to receiving an indication of a problem with the user interface, locally at the computing device using one or more test scripts specified by a service provider associated with the user interface, and transmit the report to the service provider for evaluation and initiation of corrective action.

Having described example procedures in accordance with one or more implementations, consider now an example system and device to implement the various techniques described herein.

### Example System and Device

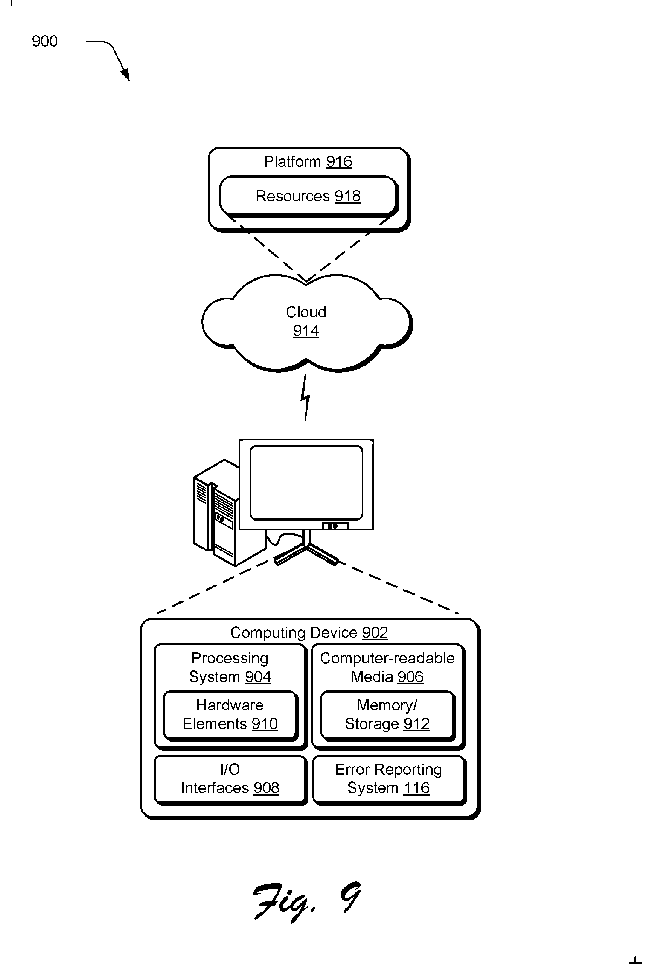

FIG. 9 illustrates an example system 900 that includes an example computing device 902, which is representative of one or more computing systems and/or devices that implement the various techniques described herein. This is illustrated through inclusion of the error reporting system 116. The computing device 902 is configured, for example, as a service provider server, as a device associated with a client (e.g., a client device), as an on-chip system, and/or as any other suitable computing device or computing system.

The example computing device 902 as illustrated includes a processing system 904, one or more computer-readable media 906, and one or more I/O interface 908 that are communicatively coupled, one to another. Although not shown, the computing device 902 is further configured to include a system bus or other data and command transfer system that couples the various components, one to another. A system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 904 is representative of functionality to perform one or more operations using hardware. Accordingly, the processing system 904 is illustrated as including hardware element 910 that are configurable as processors, functional blocks, and so forth. For instance, hardware element 910 is implemented in hardware as an application specific integrated circuit or other logic device formed using one or more semiconductors. The hardware elements 910 are not limited by the materials from which they are formed, or the processing mechanisms employed therein. For example, processors are alternatively or additionally comprised of semiconductor(s) and/or transistors (e.g., electronic integrated circuits (ICs)). In such a context, processor-executable instructions are electronically executable instructions.

The computer-readable storage media 906 is illustrated as including memory/storage 912. The memory/storage 912 represents memory/storage capacity associated with one or more computer-readable media. The memory/storage 912 is representative of volatile media (such as random-access memory (RAM)) and/or nonvolatile media (such as read only memory (ROM), Flash memory, optical disks, magnetic disks, and so forth). The memory/storage 912 is configured to include fixed media (e.g., RAM, ROM, a fixed hard drive, and so on) as well as removable media (e.g., Flash memory, a removable hard drive, an optical disc, and so forth). In certain implementations, the computer-readable media 906 is configured in a variety of other ways as further described below.

Input/output interface(s) 908 are representative of functionality to allow a user to enter commands and information to computing device 902 and allow information to be presented to the user and/or other components or devices using various input/output devices. Examples of input devices include a keyboard, a cursor control device (e.g., a mouse), a microphone, a scanner, touch functionality (e.g., capacitive, or other sensors that are configured to detect physical touch), a camera (e.g., a device configured to employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 902 is representative of a variety of hardware configurations as further described below to support user interaction.

Various techniques are described herein in the general context of software, hardware elements, or program modules. Generally, such modules include routines, programs, objects, elements, components, data structures, and so forth that perform particular tasks or implement particular data types. The terms "module," "functionality," and "component" as used herein generally represent software, firmware, hardware, or a combination thereof. The features of the techniques described herein are platform-independent, meaning that the techniques are configured for implementation on a variety of commercial computing platforms having a variety of processors.

An implementation of the described modules and techniques are stored on or transmitted across some form of computer-readable media. The computer-readable media include a variety of media that is accessible by the computing device 902. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information for access by a computer.

"Computer-readable signal media" refers to a signal-bearing medium that is configured to transmit instructions to the hardware of the computing device 902, such as via a network. Signal media typically embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 910 and computer-readable media 906 are representative of modules, programmable device logic and/or fixed device logic implemented in a hardware form that is employed in some embodiments to implement at least some aspects of the techniques described herein, such as to perform one or more instructions. Hardware, in certain implementations, includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are employed to implement various techniques described herein. Accordingly, software, hardware, or executable modules are implemented as one or more instructions and/or logic embodied on some form of computer-readable storage media and/or by one or more hardware elements 910. The computing device 902 is configured to implement instructions and/or functions corresponding to the software and/or hardware modules. Accordingly, implementation of a module that is executable by the computing device 902 as software is achieved at least partially in hardware, e.g., through use of computer-readable storage media and/or hardware elements 910 of the processing system 904. The instructions and/or functions are executable/operable by one or more articles of manufacture (for example, one or more computing devices 902 and/or processing systems 904) to implement techniques, modules, and examples described herein.

The techniques described herein are supported by various configurations of the computing device 902 and are not limited to the specific examples of the techniques described herein. This functionality is further configured to be implemented all or in part through use of a distributed system, such as over a "cloud" 914 via a platform 916 as described below.

The cloud 914 includes and/or is representative of a platform 916 for resources 918. The platform 916 abstracts underlying functionality of hardware (e.g., servers) and software resources of the cloud 914. The resources 918 include applications and/or data that is utilized while computer processing is executed on servers that are remote from the computing device 902. Resources 918 also include services provided over the Internet and/or through a subscriber network, such as a cellular or Wi-Fi network.

The platform 916 is configured to abstract resources and functions to connect the computing device 902 with other computing devices. The platform 916 is further configured to abstract scaling of resources to provide a corresponding level of scale to encountered demand for the resources 918 that are implemented via the platform 916. Accordingly, in an interconnected device embodiment, implementation of functionality described herein is configured for distribution throughout the system 900. For example, in some configurations the functionality is implemented in part on the computing device 902 as well as via the platform 916 that abstracts the functionality of the cloud 914.

### Conclusion

Although the invention has been described in language specific to structural features and/or methodological acts, the invention defined in the appended claims is not necessarily limited to the specific features or acts described. Rather, the specific features and acts are disclosed as example forms of implementing the claimed invention.

## Claims

1. A method comprising:
receiving, by a server device, an indication of a problem associated with a user interface (106) being displayed at a client computing device (102), the indication of the problem being received in response to the client computing device (102) detecting input at an error reporting control (114) of the user interface (106);
causing, by the server device, the client computing device (102) to generate a report (122) in response to receiving the indication of the problem by:
identifying a plurality of test scripts (118) associated with the user interface (106); and
causing the client computing device (102) to execute the plurality of test scripts (118) by communicating the plurality of test scripts (118) to the client computing device (102); and
receiving, by the server device, the report (122) from the client computing device (102),
wherein the error reporting control (114) is configured as a selectable option provided by the user interface (106) to enable the user (104) to indicate when a problem is perceived with the user interface (106).

2. The method of claim 1, wherein the plurality of test scripts (118) cause the client computing device (102) to:
verify whether one or more labels are present in the user interface (106);
verify whether one or more hyperlinks included in the user interface (106) are active;
verify whether one or more action elements are present in the user interface (106);
determine whether one or more elements of the user interface (106) are hidden or disabled; and
generate the report (122) to specify whether the one or more labels are present, whether the one or more hyperlinks are active, whether the one or more action elements are present, and whether the one or more elements are hidden or disabled.

3. The method of claim 1 or 2, wherein the plurality of test scripts (118) cause the client computing device (102) to:
determine a connection speed between the client computing device (102) and a network connecting the client computing device (102) to the server device;
identify one or more cookies stored on the client computing device (102);
determine a type and a version of a web browser used by the client computing device (102) to display the user interface (106);
determine a type and a version of an operating system being executed by the client computing device (102);
verify whether JavaScript is enabled on the client computing device (102);
determine whether the client computing device (102) is implementing advertisement blocking software; and
generate the report (122) to describe the connection speed, the one or more cookies, the type and the version of the web browser, the type and the version of the operating system, whether JavaScript is enabled, and whether the client computing device (102) is implementing advertisement blocking software.

4. The method of any one of claims 1 to 3, wherein causing the client computing device (102) to generate the report (122) further comprises:
causing the client computing device (102) to record at least one screenshot of a display output by the client computing device (102) during the executing the plurality of test scripts (118);
causing the client computing device (102) to prompt a user (104) of the client computing device (102) to audibly describe the problem and record audio of the user (104) describing the problem; and
generate the report (122) to include the at least one screenshot and the audio of the user describing the problem.

5. The method of any one of claims 1 to 4, further comprising:
identifying, by the server device, a solution to the problem based on the report (122); and
communicating, by the server device, at least one of steps that can be performed by a user (104) of the client computing device (102) to fix the problem or instructions that cause the client computing device (102) to automatically fix the problem.

6. A system comprising:
at least one processor; and
a computer-readable storage medium storing instructions that are executable by the at least one processor to perform operations to carry out the method according to any one of the preceding claims.

## Patentansprüche

1. Verfahren, umfassend:
Empfangen, von einer Servervorrichtung, eines Hinweises auf ein Problem im Zusammenhang mit einer Benutzeroberfläche bzw. -schnittstelle (106), die auf einer Client-Rechenvorrichtung (102) angezeigt wird, wobei der Hinweis auf das Problem als Antwort darauf empfangen wird, dass die Client-Rechenvorrichtung (102) eine Eingabe an einer Fehlermeldesteuerung (114) der Benutzeroberfläche (106) erkennt;
Veranlassen, durch die Servervorrichtung, dass die Client-Rechenvorrichtung (102) einen Bericht (122) als Antwort auf das Empfangen des Hinweises auf das Problem generiert, durch:
Identifizieren einer Mehrzahl von Testskripts (118), die mit der Benutzeroberfläche (106) verknüpft sind; und
Veranlassen der Client-Rechenvorrichtung (102), die Mehrzahl von Testskripts (118) auszuführen, indem die Mehrzahl von Testskripts (118) an die Client-Rechenvorrichtung (102) kommuniziert werden; und
Empfangen, durch die Servervorrichtung, des Berichts (122) von der Client-Rechenvorrichtung (102),
wobei die Fehlermeldesteuerung (114) als eine auswählbare Option konfiguriert ist, die von der Benutzeroberfläche (106) bereitgestellt wird, um es dem Benutzer (104) zu ermöglichen, anzugeben, wenn ein Problem mit der Benutzeroberfläche (106) wahrgenommen wird.

2. Verfahren nach Anspruch 1, wobei die Mehrzahl von Testskripts (118) die Client-Rechenvorrichtung (102) veranlassen zum:
Verifizieren, ob ein oder mehrere Labels in der Benutzeroberfläche (106) vorhanden sind;
Verifizieren, ob einer oder mehrere in der Benutzeroberfläche (106) enthaltene Hyperlinks aktiv sind;
Verifizieren, ob ein oder mehrere Aktionselemente in der Benutzeroberfläche (106) vorhanden sind;
Bestimmen, ob ein oder mehrere Elemente der Benutzeroberfläche (106) verborgen oder deaktiviert sind; und
Generieren des Berichts (122), um anzugeben, ob das eine oder die mehreren Labels vorhanden sind, ob der eine oder die mehreren Hyperlinks aktiv sind, ob das eine oder die mehreren Aktionselemente vorhanden sind und ob das eine oder die mehreren Elemente verborgen oder deaktiviert sind.

3. Verfahren nach Anspruch 1 oder 2, wobei die Mehrzahl von Testskripts (118) die Client-Rechenvorrichtung (102) veranlassen zum:
Bestimmen einer Verbindungsgeschwindigkeit zwischen der Client-Rechenvorrichtung (102) und einem Netzwerk, das die Client-Rechenvorrichtung (102) mit der Servervorrichtung verbindet;
Identifizieren eines oder mehrerer auf der Client-Rechenvorrichtung gespeicherter Cookies (102);
Bestimmen eines Typs und einer Version eines Webbrowsers, der von der Client-Rechenvorrichtung (102) zum Anzeigen der Benutzeroberfläche (106) verwendet wird;
Bestimmen eines Typs und einer Version eines Betriebssystems, das von der Client-Rechenvorrichtung (102) ausgeführt wird;
Verifizieren, ob JavaScript auf der Client-Rechenvorrichtung (102) aktiviert ist; Bestimmen, ob die Client-Rechenvorrichtung (102) Werbeblocker-Software implementiert; und
Generieren des Berichts (122), um die Verbindungsgeschwindigkeit, das eine oder die mehreren Cookies, den Typ und die Version des Webbrowsers, den Typ und die Version des Betriebssystems, ob JavaScript aktiviert ist und ob die Client-Rechenvorrichtung (102) Werbeblocker-Software implementiert zu beschreiben.

4. Verfahren nach einem der Ansprüche 1 bis 3, wobei das Veranlassen der Client-Rechenvorrichtung (102), den Bericht (122) zu generieren, ferner umfasst:
Veranlassen der Client-Rechenvorrichtung (102), während der Ausführung der Mehrzahl von Testskripts (118) zumindest einen Screenshot einer Anzeige aufzunehmen, die von der Client-Rechenvorrichtung (102) ausgegeben wird;
Veranlassen der Client-Rechenvorrichtung (102), einen Benutzer (104) der Client-Rechenvorrichtung (102) aufzufordern, das Problem hörbar zu beschreiben, und Audioaufnahmen des Benutzers (104) aufzuzeichnen, der das Problem beschreibt; und
Generieren des Berichts (122) dahingehend, den zumindest einen Screenshot und die Audioaufnahme des Benutzers zu enthalten, der das Problem beschreibt.

5. Verfahren nach einem der Ansprüche 1 bis 4, ferner umfassend:
Identifizieren, durch die Servervorrichtung, einer Lösung für das Problem basierend auf dem Bericht (122); und
Kommunizieren, durch die Servervorrichtung, von zumindest einem der Schritte, die von einem Benutzer (104) der Client-Rechenvorrichtung (102) durchgeführt werden können, um das Problem zu beheben, oder von Anweisungen, die die Client-Rechenvorrichtung (102) veranlassen, das Problem automatisch zu beheben.

6. System, umfassend:
zumindest einen Prozessor; und
ein computerlesbares Speichermedium, das Anweisungen speichert, die von dem zumindest einen Prozessor ausführbar sind, um Operationen zum Ausführen des Verfahrens nach einem der vorhergehenden Ansprüche durchzuführen.

## Revendications

1. Procédé comprenant :
recevoir, par un dispositif de serveur, une indication d'un problème associé à une interface utilisateur (106) qui est affichée au niveau d'un dispositif informatique client (102), l'indication du problème étant reçue en réponse au dispositif informatique client (102) détectant une entrée au niveau d'une commande de relevé des erreurs (114) de l'interface utilisateur (106) ;
amener, par le dispositif de serveur, le dispositif informatique client (102) à générer un relevé (122) en réponse à la réception de l'indication du problème en :
identifiant une pluralité de scripts de test (118) associés à l'interface utilisateur (106) ; et
amenant le dispositif informatique client (102) à exécuter la pluralité de scripts de test (118) en communiquant la pluralité de scripts de test (118) au dispositif informatique client (102) ; et
recevoir, par le dispositif de serveur, le relevé (122) du dispositif informatique client (102),
dans lequel la commande de relevé des erreurs (114) est configurée en tant qu'option sélectionnable fournie par l'interface utilisateur (106) pour permettre à l'utilisateur (104) d'indiquer quand un problème est perçu avec l'interface utilisateur (106).

2. Procédé selon la revendication 1, dans lequel la pluralité de scripts de test (118) amènent le dispositif informatique client (102) à :
vérifier si une ou plusieurs étiquettes sont présentes dans l'interface utilisateur (106) ;
vérifier si un ou plusieurs hyperliens inclus dans l'interface utilisateur (106) sont actifs ;
vérifier si un ou plusieurs éléments d'action sont présents dans l'interface utilisateur (106) ;
déterminer si un ou plusieurs éléments de l'interface utilisateur (106) sont cachés ou désactivés ; et
générer le relevé (122) pour spécifier si la ou les étiquettes sont présentes, si le ou les hyperliens sont actifs, si le ou les éléments d'action sont présents, et si le ou les éléments sont cachés ou désactivés.

3. Procédé selon la revendication 1 ou 2, dans lequel la pluralité de scripts de test (118) amènent le dispositif informatique client (102) à :
déterminer une vitesse de connexion entre le dispositif informatique client (102) et un réseau connectant le dispositif informatique client (102) au dispositif de serveur ;
identifier un ou plusieurs cookies stockés sur le dispositif informatique client (102) ;
déterminer un type et une version d'un navigateur Web utilisé par le dispositif informatique client (102) pour afficher l'interface utilisateur (106) ;
déterminer un type et une version d'un système d'exploitation qui est exécuté par le dispositif informatique client (102) ;
vérifier si JavaScript est activé sur le dispositif informatique client (102) ;
déterminer si le dispositif informatique client (102) met en oeuvre un logiciel de blocage de publicités ; et
générer le relevé (122) pour décrire la vitesse de connexion, le ou les cookies, le type et la version du navigateur Web, le type et la version du système d'exploitation, si JavaScript est activé, et si le dispositif informatique client (102) met en oeuvre un logiciel de blocage de publicités.

4. Procédé selon l'une quelconque des revendications 1 à 3, dans lequel amener le dispositif informatique client (102) à générer le relevé (122) comprend en outre :
amener le dispositif informatique client (102) à enregistrer au moins une capture d'écran d'un affichage émis par le dispositif informatique client (102) au cours de l'exécution de la pluralité de scripts de test (118) ;
amener le dispositif informatique client (102) à inviter un utilisateur (104) du dispositif informatique client (102) à décrire de manière audible le problème et enregistrer l'audio de l'utilisateur (104) décrivant le problème ; et
générer le relevé (122) pour inclure l'au moins une capteur d'écran et l'audio de l'utilisateur décrivant le problème.

5. Procédé selon l'une quelconque des revendications 1 à 4, comprenant en outre :
identifier, par le dispositif de serveur, une solution au problème en fonction du relevé (122) ; et
communiquer, par le dispositif de serveur, au moins une d'étapes qui peuvent être réalisées par un utilisateur (104) du dispositif informatique client (102) pour résoudre le problème ou d'instructions qui amènent le dispositif informatique client (102) à résoudre automatiquement le problème.

6. Système comprenant :
au moins un processeur ; et
un support de stockage lisible par ordinateur stockant des instructions qui sont exécutables par l'au moins un processeur pour réaliser des opérations pour effectuer le procédé selon l'une quelconque des revendications précédentes.
